# EUROPÄISCHE PATENTSCHRIFT

(11) **EP 2 418 709 B1**
(45) Veröffentlichungstag und Bekanntmachung des Hinweises auf die Patenterteilung: **09.07.2014**
(21) Anmeldenummer: 11006201.5
(22) Anmeldetag: 28.07.2011
(51) Int. Cl.: H01M 2/10, H01M 2/20, B60K 1/04, H01M 2/34, H01M 10/613, H01M 10/625, H01M 10/647, H01M 10/6557

(54) **Batteriepack**
Battery pack
Bloc-batterie

(30) Priorität: 09.08.2010 DE 102010033806
(43) Veröffentlichungstag der Anmeldung: 15.02.2012
(73) Patentinhaber: Rheinisch-Westfälische Technische Hochschule Aachen (RWTH), 52062 Aachen (DE)
(72) Erfinder: Ginsberg, Sven Dipl.-Ing., 52064 Aachen (DE)
(74) Vertreter: Borkowski, Jens

(56) Entgegenhaltungen:
- EP-A1- 0 580 412
- WO-A2-03/103083
- DE-A1-102004 043 829
- DE-A1-102008 010 822
- DE-A1-102008 027 293

## Beschreibung

Die Erfindung betrifft ein Batteriepack umfassend eine Vielzahl von Batterieelementen, die in wenigstens einer Packungsschicht nebeneinander gepackt sind und zumindest bereichsweise innerhalb einer Packungsschicht zwischen wenigstens zwei benachbarten Batterieelementen wenigstens ein Deformationselement angeordnet ist, wobei unter einer äußeren Krafteinwirkung die Batterieelemente unter Deformation von Deformationselementen verschieblich sind.

Im Stand der Technik ist es bekannt, Batterien oder Batteriepacks aus mehreren einzelnen Batterieelementen zusammenzufügen, um eine gewünschte Spannungshöhe oder Gesamtkapazität des Batteriepacks zu erzielen. Hierbei stellen die einzelnen Batterieelemente für sich jeweils eigenständige Batterien dar, die mit anderen benachbarten Batterieelementen elektrisch kontaktiert werden können, um beispielsweise in einer Reihenschaltung die Spannung zu erhöhen oder in einer Parallelschaltung die Gesamtkapazität des Batteriepacks zu vergrößern.

Dabei können die Vielzahl der Batterieelemente in einer einzigen Schicht nebeneinander angeordnet sein oder aber auch in mehreren Schichten übereinander, je nachdem, welche Anforderungen an die Spannung oder die Kapazität eines solchen Batteriepacks und somit an die nötige Gesamtanzahl von Batterieelementen gestellt werden.

Im Stand der Technik ist es weiterhin bekannt, dass Batteriepacks dieser Art und die darin eingesetzten Batterieelemente gefährliche Stoffe, beispielsweise gesundheitsschädliche oder brennbare Substanzen enthalten können, deren Austritt aus einem solchen Batteriepack bzw. den einzelnen Batterieelementen zu verhindern ist.

Relevant wird dies in verschiedenen Anwendungsgebieten, beispielsweise dann, wenn ein solches Batteriepack für elektrisch angetriebene Kraftfahrzeuge eingesetzt werden soll. In einem solchen Fall kann es beispielsweise bei einem Unfall des Kraftfahrzeugs zu einer Krafteinwirkung auf das Batteriepack kommen, der dazu führt, dass bei einer zu großen Krafteinwirkung das Batteriepack bzw. die einzelnen Batterieelemente zerstört werden und die darin befindlichen Substanzen austreten können und eine Gefahr darstellen.

Besonders im Anwendungsgebiet der Kraftfahrzeugtechnik ist es daher bekannt geworden, einzusetzende Batteriepacks entweder in Zonen eines Kraftfahrzeugs unterzubringen, die auch im Fall eines Unfalls ein geringes Deformationsrisiko haben, wodurch häufig die Innenraumverhältnisse negativ beeinflusst werden.

Andererseits ist es auch bekannt, Batteriepacks zum Einsatz in Kraftfahrzeugen besonders zu schützen, beispielsweise dadurch, dass ein äußeres Batteriegehäuse besonders hoher Festigkeit eingesetzt wird, beispielsweise aus Panzerstahl, um so die in dem Gehäuse angeordneten Batteriepacks bzw. einzelne Batterieelemente vor einer Zerstörung zu schützen.

Solche besonders massiv und starr ausgeführten Batteriegehäuse haben neben dem Nachteil eines hohen Gewichtes, welches sich negativ auf die Effizienz des Fahrzeugs auswirkt, auch den weiteren Nachteil, dass solche starren Batteriegehäuse, die auf diese bei einem Unfall einwirkenden Kräfte ohne Abschwächung weiterleiten, da die starren und massiv ausgeführten Batteriegehäuse keinerlei Unfallenergie durch Deformation absorbieren.

Ein Batteriepack der gattungsgemäßen Art ist z.B. aus dem Dokument DE 10 2008 010 822 A1 bekannt, welches Deformationselemente mit als Sollbruchstellen wirkenden Einkerbungen zeigt. Dokument WO03/103083 A2 beschreibt eine Batterie mit fluidführenden Kanälen, um eine Kühlung zu bewirken, jedoch keine Deformationselemente. Die Kühlung einer Fahrzeugbatterie wird auch in DE 10 2008 027 293 A1 offenbart. Dokument DE 10 2004 043 829 A1 beschreibt einen Batteriepack mit Wärmeausgleichselementen zwischen einzelnen Batteriezellen. Dokument EP 0 580 412 A1 beschreibt lediglich ein Rack mit mehreren Elektronikkomponenten, wobei Aspekte der Kühlung angesprochen werden.

Es ist daher die Aufgabe der Erfindung, ein Batteriepack der eingangs genannten Art bereitzustellen, das im Falle eines Unfalls die Eignung aufweist, seinerseits Unfallenergie zu absorbieren, hierdurch Kraftfahrzeuginsassen zu schützen und gleichzeitig eine erhöhte Sicherheit gegen das Austreten gefährlicher Substanzen aus den einzelnen Batterieelementen bietet.

Gemäß der Erfindung wird diese Aufgabe mit einem Batteriepack der eingangs genannten Art gelöst, bei dem die Batterieelemente aus einer Vielzahl von Batteriezellen ausgebildet sind und das wenigstens eine Deformationselement entweder als ein Hohlprofil ausgebildet ist, dessen inneres Volumen bei einer Deformation kollabierbar ist oder als geschäumter Körper ausgebildet ist, der in seinem gesamten Volumen eine Vielzahl von Hohlräumen ausbildet, die bei einer Krafteinwirkung kollabierbar sind, wobei Batterieelemente und Deformationselemente aufeinander folgend in Reihen angeordnet sind, die parallel zueinander und versetzt sind und ein Batterieelement einer Reihe zum Teil in einen Abstandbereich zwischen zwei Batterieelementen einer benachbarten Reihe hineinragt und in dem Abstandsbereich ein Deformationselement angeordnet ist.

Deformationselemente können somit mehrfach und regelmäßig oder unregelmäßig angeordnet in einer Packungsschicht vorgesehen sein.

Dabei wird im Sinne der Erfindung unter einem Deformationselement ein solches Element verstanden, welches geeignet ist, durch Deformation, beispielsweise seiner äußeren Hülle, Energie / Kräfte, insbesondere die bei einem Unfall auftretende Energie / Kräfte zu absorbieren. Dabei ist ein Deformationselement bevorzugt so eingerichtet, dass bezogen auf eine gleiche Energie / Kraft das Deformationselement früher bzw. leichter deformiert wird als ein jedes Batterieelement des Batteriepacks.

Es ist somit ein wesentlicher Kerngedanke der Erfindung, innerhalb eines Batteriepacks aus einer Vielzahl von Batterieelementen zwischen den in einer Schicht angeordneten Batterieelementen wenigstens bereichsweise solche Deformationselemente anzuordnen, die bei einer Krafteinwirkung in der Schichtebene anstelle der Batterieelemente zerstört werden.

Sofern eine Zerstörung der Batterieelemente nicht vollständig verhindert werden kann, soll mit den Deformationselementen zumindest erzielt werden, dass ein größter Teil der wirkenden Energie / Kräfte bei einem Unfall durch die Deformationselemente aufgenommen wird, so dass nur eine geringere zerstörende Einwirkung auf die Batterieelemente stattfindet und somit, wenn schon die Zerstörung von Batterieelementen in einem solchen Fall nicht vollständig verhindert werden kann, so doch die Zerstörung signifikant verringert ist.

Es wird hier mit der erfindungsgemäßen Lösung eine Abkehr betrieben, von den bislang im Stand der Technik durch starre und massive Ausführung geschützten Batteriepacks. Hier hingegen wird eine Zerstörung / Deformation von extra dafür vorgesehenen Deformationselementen bewusst gewünscht. Bevorzugt sind zu diesem Zweck die Batterieelemente und /oder Deformationselemente innerhalb der Packungsschicht verschieblich angeordnet. Wirkt somit eine äussere Kraft auf ein erfindungsgemäßes Batteriepack bzw. dessen Gehäuse, sofern es eines aufweist, so erzeugt die Kraft eine Verschiebung von Batterieelementen, die durch die Verschiebung die wirkende Kraft auf die Deformationselemente weiterleiten, welche sodann durch Deformation die Kraft aufnehmen.

Unter einem Batterieelement im Sinne der Erfindung werden besonders auch wieder aufladbare Batterieelemente verstanden, die oft auch als Akkumulatoren bezeichnet werden.

Erfindungsgemäß ist es vorgesehen, dass ein Deformationselement z.B. als ein Hohlprofil ausgebildet ist. Ein solches Hohlprofil kann z.B. aus einem Metall, einem Kunststoff oder auch einem Verbundwerkstoff ausgebildet sein und hinsichtlich seiner Formgestaltung und/oder Wandstärke entsprechend angepasst sein, um oben genannte Bedingungen zu erfüllen und dementsprechend bei einem Unfall und einer dadurch bedingten Krafteinwirkung vor einem jeweiligen Batterieelement zu deformieren.

Die Deformation kann beispielsweise darin liegen, dass das Hohlprofil gequetscht bzw. gestaucht wird und die äußeren Hohlprofilwandungen in Richtung des Inneren des Hohlprofils in einem solchen Fall zurückweichen, somit also das innere Volumen des Hohlprofils kollabiert. Ein solches, als Hohlprofil ausgeführtes Deformationselement kann dabei in bevorzugter Ausführung senkrecht zur Schichtebene offen ausgebildet sein und in der Schichtebene geschlossen sein.

Die Schichtebene ist hier nicht zwingend als mathematische Ebene zu verstehen, kann jedoch in einem solchen Fall z.B. als die Ebene angenommen werden, in der die Mitten bzw. Schwerpunkte aller Batterieelemente der Packungsschicht angeordnet sind. Die Schichtebene kann auch praktisch durch eine Fläche gebildet sein, auf welcher die Batterieelemente der Packungsschicht aufstehen.

Durch die vorbeschriebene Ausführung kann ein konstruktiver Aufbau eines erfindungsgemäßen Batteriepacks in einfacher Weise dadurch erfolgen, dass ein z.B. durch einen Strangpressprozess bzw. allgemein Extrusionsprozess hergestelltes Hohlprofil auf gewünschte Länge geschnitten wird (z.B. die Höhe der Batterieelemente in der Packungsschicht) und die jeweiligen Hohlprofilstücke als erfindungsgemäßes Deformationselement in die Schicht einer Packung aus einer Vielzahl von Batterieelementen eingesetzt werden.

In weiterer möglicher Ausführung kann es dabei vorgesehen sein, dass ein Deformationselement z.B. im Inneren des Hohlprofils durch wenigstens eine Querverstrebung verstärkt ist. Die Ausrichtung bzw. auch die Anzahl der Querverstrebungen kann hierbei auch eingesetzt werden, um verschiedenartige Deformationen in Abhängigkeit der Richtung der einwirkenden Kraft zu erzeugen.

So kann z.B. bewirkt werden, dass ein Deformationselement in einer Richtung einer einwirkenden Kraft einen größeren Widerstand entgegenbringt als in einer anderen Richtung. Durch die Integration solcher Deformationselemente in einer Packungsschicht von Batterieelementen kann somit auch die Reaktion des insgesamt ausgebildeten Batteriepacks auf einwirkende Kräfte richtungsabhängig ausgelegt werden.

Es besteht hier auch weiterhin die Möglichkeit, statt oder auch in Ergänzung zu Querverstrebungen das Innere der Deformationselemente mit einem energieabsorbierenden Füllstoff auszufüllen. Dies kann bei allen oder zumindest einigen der Deformationselemente vorgesehen sein.

Erfindungsgemäß können Deformationselemente auch als geschäumte Körper, z.B. geschäumtes Metall ausgebildet sein, so dass ein Deformationselement dieser Art in seinem gesamten Volumen eine Vielzahl von Hohlräumen ausbildet, die bei einer Krafteinwirkung kollabieren können.

In einer anderen, gegebenenfalls auch kombinierbaren Ausführung kann es vorgesehen sein, dass zumindest ein Deformationselement, ggfs. alle, auch als ein fluiddurchströmter Kühlkanal ausgebildet ist. Es besteht so die Möglichkeit, beispielsweise senkrecht zur Packungsschicht, bzw. Schichtebene ein Fluid durch zumindest einige, gegebenenfalls auch alle der Deformationselemente zu führen, um so eine Kühlung des Batteriepacks unter der Belastung im Betrieb durchzuführen.

In einfacher Ausführung kann es sich bei einem solchen Fluid beispielsweise um Luft handeln, die z.B. durch ein Druckgefälle, beispielsweise erzeugt durch Ventilatoren, durch die Deformationselemente gefördert wird. Es ist ebenso eine Flüssigkeitskühlung, z.B. auch mit Anschluss an den Kühlkreislauf eines Kraftfahrzeugs möglich, insbesondere wenn es sich um ein sogenanntes Hybridkraftfahrzeug handelt, das neben einem Elektroantrieb mittels eines solchen Batteriepacks auch einen kraftstoffbetriebenen Verbrennungsmotor mit Kühlkreislauf aufweist. Aber auch bei rein elektrisch angetriebenen Fahrzeugen können diese Kühlkanäle als Teil des Kühlmittelkreislaufs der aktiven oder passiven Batteriekühlung mittels Flüssigkeit genutzt und so ggf. auf separate Leitungen verzichtet werden.

Um beispielsweise eine möglichst gleichmäßige Energieaufnahme durch Deformation bei von außen auf das Batteriepack einwirkenden Kräften, z.B. bei einem Unfall zu ermöglichen, kann es in einer weiteren Ausführung der Erfindung vorgesehen sein, dass die Deformationselemente in der Packungsschicht in wenigstens einer ersten Richtung eine erste Periodizität und in wenigstens einer zweiten Richtung eine zweite, ggfs. identische Periodizität aufweisen.

So ist eine Packungsschicht mit einer Vielzahl von Batterieelementen bei dieser erfindungsgemäßen Ausführungsform in wenigstens zwei Richtungen gleichmäßig mit Deformationselementen durchsetzt, so dass insbesondere auch unabhängig vom Ort der Krafteinwirkung auf ein solches erfindungsgemäßes Batteriepack eine gute Absorption der Kräfte erfolgen kann. Die wenigstens eine erste und wenigstens eine zweite Richtung, in welcher die vorgenannten Periodizitäten bestehen, können hierbei z.B. senkrecht zueinander angeordnet sein, dies ist jedoch für die Realisierung der Erfindung nicht zwingend.

Ein konstruktiv einfach umzusetzender Aufbau eines Batteriepacks ist erfindungsgemäß dann erzielt, wenn die Batterieelemente und die Deformationselemente in parallel zueinander liegenden Reihen angeordnet sind.

Erfindungsgemäß folgen innerhalb einer Reihe Batterieelemente und Deformationselemente aufeinander, wobei es hier vorgesehen sein kann, nach n-Batterieelementen innerhalb einer Reihe ein Deformationselement in die Reihe einzusetzen, mit n größer gleich 1. Im einfachsten Fall kann somit nach jedem Batterieelement innerhalb einer Reihe ein Deformationselement in die Reihe integriert sein. Solche Reihen können erfindungsgemäß mehrfach parallel nebeneinander liegen.

In einer möglichen Ausführungsform der Erfindung kann es vorgesehen sein, dass Deformationselemente im Schnitt parallel zur Packungsschicht bzw. der Schichtebene dieselbe Querschnittsform und/oder dieselbe Querschnittsflächengröße aufweisen wie Batterieelemente. In einer einfachen konstruktiv umzusetzenden Ausführungsform kann es auch vorgesehen sein, dass die Deformationselemente die exakt gleichen Außenabmessungen aufweisen wie Batterieelemente.

In einer anderen Ausführung kann es auch vorgesehen sein, dass die Deformationselemente zwar die gleiche Querschnittsform aufweisen, jedoch nicht die gleiche Querschnittsflächengröße aufweisen wie Batterieelemente, insbesondere kleiner sind in der Querschnittsflächengröße.

Bei einer Anordnung der Batterieelemente und der Deformationselemente in gemischten Reihen, bei denen also sowohl innerhalb einer Reihe Batterieelemente als auch Deformationselemente angeordnet sind, sind erfindungsgemäß die parallel zueinander liegenden Reihen auch mit einem Versatz zueinander angeordnet.. Bei solchen versetzt parallel zueinander liegenden Reihen ist es auch vorgesehen, dass ein Batterieelement einer Reihe zum Teil in einen Abstandsbereich zwischen zwei Batterieelementen einer benachbarten Reihe hineinragt und wobei weiterhin in einem solchen Abstandsbereich ein Deformationselement angeordnet ist.

Bei einer solchen Ausgestaltung ist üblicherweise das Deformationselement zumindest in einer Richtung senkrecht zu der betrachteten Reihe mit einer geringeren Breite versehen als ein Batterieelement, so dass in den Abstandsbereich zwischen zwei Batterieelementen neben diesem darin angeordneten Deformationselement auch noch ein Teil eines benachbarten Batterieelementes einer parallel liegenden und insbesondere versetzt angeordneten Reihe hineinragen kann.

Eine Ausführung dieser Art hat beispielsweise den Vorteil, dass bei einer Krafteinwirkung in Richtung einer solchen Reihe die wirkende Kraft nicht nur eine Deformation der in dieser Reihe liegenden Deformationselemente hervorruft, sondern durch die bereichsweise Überdeckung / Überlappung von Batterieelementen in Richtung der Reihe auch eine Auswirkung und somit eine Kraftübertragung auf benachbarte Reihen erfolgt. Eine wirkende Kraft, die z.B. bei einem Unfall entsteht, wird somit innerhalb eines erfindungsgemäßen Batteriepacks umgeleitet und dabei aufgespalten, so dass in den verschiedenen Richtungen geringere Kraftanteile wirken und durch die Deformation der Deformationselemente absorbiert werden.

In einer anderen Ausführung kann es auch vorgesehen sein, dass ein Batterieelement und je ein Deformationselement durch formschlüssiges Aneinanderliegen eine Packungseinheit ausbilden. Eine solche Packungseinheit kann einerseits durch das reine Aneinanderliegen dieser beiden Elemente entstehen, es kann aber auch andererseits vorgesehen sein, eine solche Packungseinheit durch Einhäusung zu bilden, so dass in einem gemeinsamen Gehäuse ein Batterieelement und ein Deformationselement angeordnet sind.

Ein solches Gehäuse muss bei einer derartigen Ausführungsform kein starres Gehäuse sein, sondern es reicht hingegen aus, Batterieelement und Deformationselement durch eine vergleichsweise einfache Umhüllung aneinander zu befestigen. In einer einfachen Ausgestaltungsvariante liegen wie eingangs genannt Batterieelement und Deformationselement lediglich formschlüssig aneinander, ohne selbst aneinander in irgendeiner Art und Weise befestigt zu sein.

Es ist dabei weiterhin vorgesehen, dass mehrere Packungseinheiten der so gebildeten Art in der Packungsschicht aneinander anliegen, insbesondere formschlüssig aneinander anliegen. Dabei können beispielsweise mehrere Packungseinheiten innerhalb einer geraden Reihe hintereinander angeordnet sein. In einer solchen gebildeten geraden Reihe können die jeweiligen Packungseinheiten jeweils um 180 Grad verdreht zueinander angeordnet sind, insbesondere dann, wenn so ausgebildete Packungseinheiten wenigstens zwei nicht parallel zueinander verlaufende äußere Flächenbereiche aufweisen.

Eine bevorzugte Ausführung, die mit den jeweils vorherigen Ausführungen kombinierbar ist, wird allgemein darin gesehen, wenn ein Batterieelement und/oder ein Deformationselement und/oder eine Packungseinheit, die aus beiden Elementen gebildet ist, wenigstens einen, bevorzugt wenigstens zwei äußere Flächenbereiche aufweist, die schräg zur Längserstreckung einer Reihe angeordnet sind. Bevorzugt sind dabei solche Flächenbereiche schräg zur Längserstreckung der Reihe angeordnet, die senkrecht liegen zur Packungsschicht bzw. zu einer Ebene dieser Packungsschicht.

Durch diese Ausführung wird bewirkt, dass eine Kraft, die z.B. bei einem Unfall entsteht und in die Schicht des erfindungsgemäßen Batteriepacks hineingerichtet ist, durch die schräg angeordneten Flächenbereiche, insbesondere äußere Gehäuseflächenbereiche des Batterieelementes und/oder eines Deformationselementes und/oder einer Packungseinheit aus der in der ursprünglichen Kraftwirkung liegenden Richtung abgelenkt werden.
Dies gilt besonders, wenn die Wirkung der Kraft in Richtung der Längserstreckung der Reihenanordnung liegt.

In weiterer bevorzugter Ausführung ist ein Batteriepack der erfindungsgemäßen Art so ausgestaltet, dass es in der Packungsschicht bzw. der Schichtebene keine gedachte Kraftwirkungslinie gibt, die zu allen äußeren Flächenbereichen eines Batterieelementes, eines Deformationselementes oder einer Packungseinheit entweder senkrecht oder parallel ist, vielmehr gemäß der erfindungsgemäßen Ausgestaltung immer nur unter einem von 0 und 90 Grad abweichenden Winkel, also immer schräg zu einem der vorgenannten Flächenbereiche angeordnet ist, so dass unabhängig von der Richtung, in welcher eine Kraft bei einem Unfall auf das erfindungsgemäße Batteriepack einwirkt, die wirkende Kraft von ihrer ursprünglichen Richtung abgelenkt bzw. in eine Vielzahl von Richtungen die wirkende Kraft aufgespalten wird. Dies wird z.B. erreicht, wenn aneinander angrenzende, insbesondere zur Packungsschicht senkrechte Flächenbereiche eines jeden Batterieelements / Deformationselements Winkel ungleich 90 Grad einschließen.

Besonders hierdurch wird sicher gestellt, dass eine Deformation nicht nur bei den in Kraftwirkungsrichtung hintereinander liegenden Deformationselementen erfolgt, sondern es wird vielmehr erzielt, dass durch die schräg zur Kraftrichtung liegenden Flächenbereiche sich Batterieelement und/oder Deformationselement und/oder Packungseinheit so verschieben und bei der Verschiebung Deformationselemente deformiert werden, dass Batterieelemente aus ihrer ursprünglichen Reihenanordnung in Richtung benachbarter Reihen ausweichen und so die auf das Batteriepack einwirkende Kraft über eine Vielzahl auch seitlich liegender Batterieelemente und Deformationselemente verteilt wird.

Bei einer Anordnung, bei welcher innerhalb eines Batteriepacks nicht nur eine Schicht aus Batterieelementen und Deformationselementen angeordnet ist, sondern wenigstens zwei übereinander liegende Schichten, kann es auch vorgesehen sein, dass die Batterieelemente und/oder Deformationselemente und/oder daraus gebildete Packungseinheiten äußere Flächenbereiche aufweisen, die eine Neigung aus der Senkrechten zur Packungsschicht aufweisen. Selbst durch eine nur in einer Schichtebene wirkende Kraft wird so eine Bewegung von Batterieelementen nicht nur schräg zur Kraftrichtung in der Schicht, sondern auch aus der Schicht in Richtung zu einer benachbarten Schicht bewirkt, so dass eine in einer bestimmten Höhe in ein Batteriepack einwirkende Kraft auch auf andere Höhenbereiche und benachbarte Schichten verteilt wird. Um dies zu erzielen können Batterieelemente und/oder Deformationselemente und/oder daraus gebildeten Packungseinheiten z.B. pyramidenförmig ausgebildet sein, besonders bevorzugt mit dreieckiger Grundfläche der Pyramide.

In einer weiterhin bevorzugten Ausführungsvariante kann es vorgesehen sein, dass ein Batterieelement und/oder ein Deformationselement und/oder eine Packungseinheit im Schnitt parallel zur Packungsschicht einen im Wesentlichen trapezförmigen oder dreiecksförmigen Querschnitt aufweist. Dabei soll diese Form nicht in der mathematischen Exaktheit verstanden werden, vielmehr kann es Rundungen oder zumindest nicht mathematisch spitz geformte Übergänge geben.

In einer beispielhaften Ausgestaltung kann es hier vorgesehen sein, dass ein Batterieelement in dieser Querschnittsrichtung zumindest im Wesentlichen trapezförmig ausgebildet ist, wobei an die kurze der beiden parallelen Trapezseiten ein dreieckiges oder ebenfalls trapezförmiges Deformationselement anliegt, dessen kontaktierende Dreiecks- oder Trapezseite die im Wesentlichen gleiche Länge aufweist wie die kurze Trapezseite des Batterieelementes.

Es kann sich so durch die Aneinanderfügung von Batterieelement und Deformationselement eine Packungseinheit im oben genannten Sinne ergeben, bei denen Deformationselement und Batterieelement zumindest lose bevorzugt formschlüssig aneinander anliegen und die Packungseinheit durch das Aneinanderanliegen in der genannten Querschnittsrichtung wiederum eine Trapezform, bevorzugt eine Dreiecksform aufweist.

Die so gebildeten Packungseinheiten können wie zuvor genannt innerhalb einer Reihe angeordnet werden, wobei die in einer Reihe aufeinanderfolgenden Packungseinheiten jeweils um 180 Grad zueinander verdreht sind. Hierdurch kann eine sehr hohe Packungsdichte ohne Freiräume erzielt werden, wobei das Gesamtvolumen eines Batteriepacks zum überwiegenden Teil durch Batterieelemente und zu einem geringeren Teil durch Deformationselemente bzw. deren Volumina eingenommen ist.

Ein einer Ausführung kann es auch vorgesehen sein, Batterieelemente einer gegebenen Querschnittsform (parallel zur Packungsschicht / Packungsebene), insbesondere mit einer der zuvor genannten Querschnittformen maximal dicht aneinander zu packen, wobei zwischen den Batterieelementen Freiräume entstehen und sodann in diese Freiräume Deformationselemente zu integrieren, die in ihrer Querschnittsform an die Querschnittsform der entstehenden Freiräume angepasst sind. Unter einer maximal dichten Packung wird dabei verstanden, dass die Batterieelemente mit ihrem jeweils identischen vorgegebenen Querschnitt so in der Packungsschicht aneinander angeordnet werden, dass minimale Freiräume zwischen den Batterieelementen entstehen.

Beispielsweise entstehen bei der maximal dichten Packung von Batterieelementen mit kreisrundem Querschnitt Freiräume, von denen jeder von drei Batterieelementen umgeben ist und der in der Querschnittsform einem Dreieck mit nach innen gewölbten Seitenflächen entspricht. Ein korrespondierend ausgeformtes dreieckiges Deformationselement mit nach innen gewölben Seitenflächen kann in einen solchen Freiraum eingefügt werden. Durch Krafteinwirkung von außen verschieben sich die Batterieelemente aus der maximal dichten Packung heraus unter gleichzeitiger Verformung der Deformationselemente, so dass die Kraft / Energie absorbiert werden kann.

Bei allen hier beschriebenen Ausführungsformen kann es vorgesehen sein, dass ein genanntes Batterieelement selbst als eine einzelne Batteriezelle ausgebildet ist, die die gewünschte, insbesondere zuvor beschriebene Formgestalt aufweist. In einer anderen Ausführungsform kann es ebenso vorgesehen sein, dass ein Batterieelement der hier genannten Art aus einer Vielzahl von Batteriezellen, insbesondere zylinderförmigen Batteriezellen, ausgebildet ist, wobei in bevorzugter Anordnung die Zylinderachsen dieser Batteriezellen senkrecht zur Packungsschicht angeordnet sind.

Hierbei können die einzelnen Batteriezellen untereinander entsprechend einer vorgegebenen Anwendung kontaktiert sein um das Batterieelement mit einer gewünschten Spannung oder einer gewünschten Kapazität auszubilden. Ein solches aus einzelnen Batteriezellen ausgebildetes Batterieelement kann ein Gehäuse aufweisen, welches die Batteriezellen umgibt, wobei ein solches Gehäuse plane Flächenbereiche aufweisen kann. In anderer Ausgestaltung kann es auch vorgesehen sein, die einzelnen Batteriezellen lediglich einander mechanisch kontaktierend anzuordnen, z.B. dadurch, dass die Batteriezellen durch eine Folie, z.B. Schrumpffolie oder einen Schrumpfschlauch, aneinander gebunden werden. Die so gebildeten äußeren Flächenbereiche eines so ausgeführten Batterieelementes können in einer solchen Anordnung von einer ebenen Fläche abweichen. Die Flächenbereiche können vielmehr wellenartig die Zylinderform der Batteriezellen nachbilden.

In einer Weiterbildung der erfindungsgemäßen Ausführung kann es vorgesehen sein, dass ein Batterieelement und/oder eine Packungseinheit elektrische Kontaktelemente aufweist, wobei Kontaktelemente benachbarter, insbesondere in einer Reihe benachbarter Batterieelemente und/oder Packungseinheiten, einander kontaktieren, so dass durch die in der genannten Packungsschicht angeordneten einzelnen Batterieelemente und/oder Packungseinheiten automatisch durch die Anordnung eine elektrische Verschaltung der einzelnen Batterieelemente erfolgt und so das erfindungsgemäß ausgebildete Batteriepack eine gewünschte Spannung oder Kapazität aufweist.

Erfindungsgemäß ist es hierbei vorgesehen, dass die durch die Packung erzeugte Kontaktierung durch eine Verschiebung der Batterieelemente und/oder Packungseinheiten untereinander, insbesondere bei einer äußeren Krafteinwirkung aufgrund eines Unfalls lösbar ist. Dies hat den weiteren Vorteil, dass im Falle eines Unfalls durch die sich lösenden Kontaktierungen zwischen den Batterieelementen des Batteriepacks außer Funktion gesetzt wird und somit im Wesentlichen nur noch aus einer Vielzahl von einzelnen, sich elektrisch nicht beeinflussenden Batterieelementen besteht.

Die Kontaktierung zwischen einzelnen Batterieelementen kann dabei so sein, dass eine elektrische Verbindung zwischen den Kontakten benachbarter Batterieelemente lediglich dadurch entsteht, dass die Kontaktierungen aneinander anliegen, wenn die Batterieelemente erfindungsgemäß innerhalb des Batteriepacks angeordnet sind. Durch ein Verschieben der einzelnen Batterieelemente bei einem Unfall wird die Berührung dieser elektrischen Kontakte aufgehoben, so dass keine weitere Kontaktierung zum Nachbarbatterieelement besteht.

Es kann ebenso vorgesehen sein, dass eine Kontaktierung zwischen benachbarten Batterieelementen bei der erfindungsgemäßen Ausführung durch eine zwischen zwei Batterieelementen verlaufende Leiterbahn erzeugt ist, die bei einer Verschiebung der Batterieelemente relativ zueinander zerstört wird, beispielsweise durch ein Auf- bzw. Abreißen.

Ausführungsformen der Erfindung sind in den nachfolgenden Figuren dargestellt. Es zeigen:
- Figur 1: eine einfachste Ausführungsform mit Batterieelementen und Deformationselementen gleichen Querschnitts
- Figur 2: eine Ausführungsform von Batterieelementen und Deformationselementen in einer Anordnung zueinander versetzter paralleler Reihen
- Figur 3: eine Anordnung aus Batterieelementen und Deformationselementen, die in Reihe liegende Packungseinheiten bilden
- Figur 4: ein Batterieelement gemäß Figur 3
- Figur 5: die Ausbildung von elektrischen Kontaktierungen zwischen benachbarten Batterieelementen

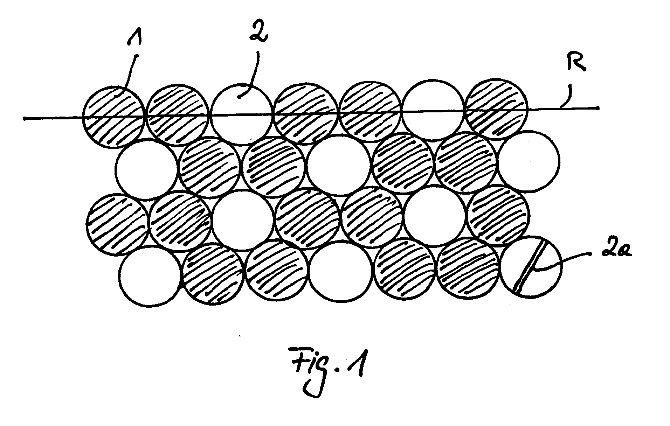

In einer konstruktiv einfachen Ausführungsform zeigt die Figur 1 die Ausbildung eines erfindungsgemäßen Batteriepacks aus Batterieelementen 1 und Deformationselementen 2, die in der vorliegenden Ausführung einfacherweise exakt gleichen Querschnitt hinsichtlich Form und Querschnittsflächegröße aufweisen. Bei der hier gewählten Ausführung liegt die Querschnittsfläche parallel zur Schichtebene, die hier durch die Papierebene der zeichnerischen Darstellung gegeben ist.

In einer Abfolge von zwei Batterieelementen 1 und einem nachfolgenden Deformationselement 2 sind hier mehrere Reihen R gebildet, die parallel zueinander und versetzt angeordnet sind.

In dieser einfachen Ausführung können z.B. die Batterieelemente 1 bei nicht erfindungsgemäßer Ausführung durch zylindrisch ausgebildete Batteriezellen gebildet sein und die Deformationselemente 2 durch Hohlzylinder gleicher Abmessung.

Es ergibt sich hier der erfindungsgemäße Vorteil, dass durch eine Krafteinwirkung, unabhängig von deren Richtung, die Batterieelemente 1 gegeneinander und in Richtung auf Deformationselemente 2 verschoben werden, wobei die Deformationselemente 2 deformiert werden und so die wirkenden Kräfte absorbieren. Hierbei sind, wie im allgemeinen Teil beschrieben, die Deformationselemente so ausgewählt, dass sie hinsichtlich der wirkenden Kräfte eine geringere Zerstörschwelle aufweisen als die Batterieelemente, so dass sich in dem hier gezeigten Schichtaufbau von einer Vielzahl von Batterieelementen und den Deformationselementen sich die Deformationselemente zum Schutz der Batterieelemente opfern, z.B. dadurch, dass die Außenwände in Richtung des Inneren kollabieren.

In einer möglichen Ausführung können hier die Deformationselemente 2 auch durch den inneren Querschnitt verlaufende Stege 2a aufweisen, wie es hier an einem Beispiel eines Deformationselementes 2 illustriert ist.

Deformationselemente können auch weiterhin mit kraft- bzw. energieabsorbierenden Materialien gefüllt sein. Dies gilt allgemein für jede mögliche Art der Anordnung und Formgestaltung von Deformationselementen, unabhängig von der hier konkreten Ausgestaltung der Figur 1. Ebenso gilt für alle möglichen Ausführungen, dass z.B. verbleibende Zwischenräume zwischen Batterieelementen und/oder Deformationselementen durch weitere Materialien, insbesondere energie- und/oder kraftabsorbierende Materialien gefüllt sein können.

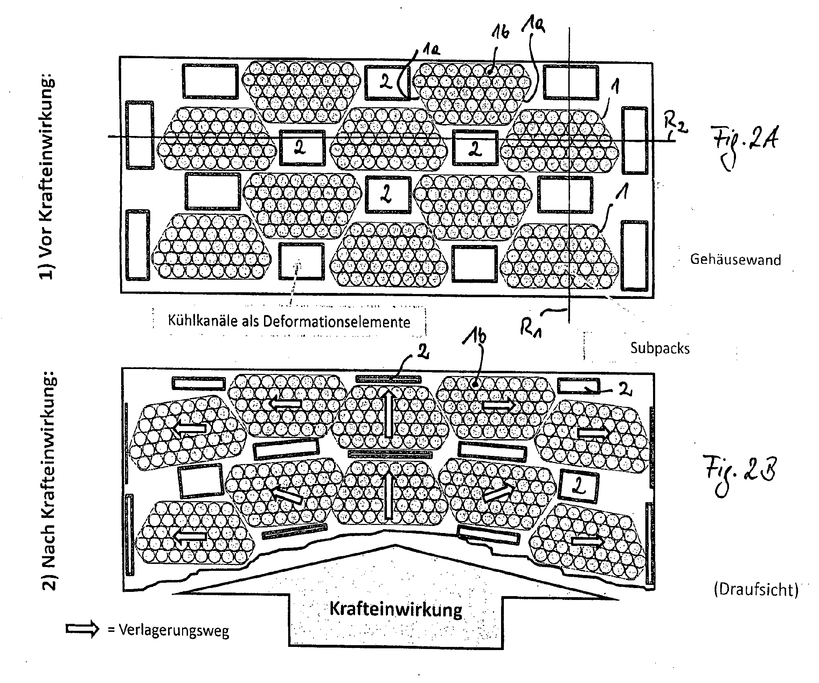

Eine andere Ausgestaltung, in der die Querschnittsform und Querschnittsgröße zwischen Batterieelementen und Deformationselementen im Schnitt parallel zur Schichtebene voneinander abweichen, zeigen die Figuren 2 und zwar hinsichtlich der Figur 2A im ordnungsgemäß gepackten Zustand vor einer Krafteinwirkung z.B. durch einen Unfall und bezüglich der Figur 2B nach einer Krafteinwirkung aufgrund eines Unfalls.

Die Figur 2a zeigt hier, dass es eine Anordnung in Reihe R1 oder auch R2 gibt, wobei unabhängig davon, welche der gewählten Reihen betrachtet wird, innerhalb einer Reihe eine Abfolge von Batterieelement 1 und Deformationselement 2 vorliegt.

Egal welche Reihenanordnung als Bezugspunkt gewählt wird, ist die Anordnung so, dass sich zwischen zwei in Reihe liegenden Batterieelementen 1 ein Abstandsbereich ergibt, in welchem sowohl ein Deformationselement 2 angeordnet ist als auch zum Teil ein Batterieelement 1 einer benachbarten Reihe. In Reihenrichtung betrachtet überlappen sich somit die Seitenbereiche von Batterieelementen 1 benachbarter Reihen.

Bei dieser Anordnung und insbesondere auch dadurch, dass hier zumindest die Batterieelemente 1 wenigstens zwei Flächenbereiche 1a aufweisen, deren Flächen schräg, d.h. weder unter 0 Grad noch unter 90 Grad zur Längserstreckung der Reihe liegen, ergibt sich die vorteilhafte Wirkung, dass bei einer Krafteinwirkung, wie sie in der Figur 2B dargestellt ist, die wirkende Kraft sowohl auf die in einer Reihe hintereinander liegenden Deformationselemente 2 wirkt als auch durch eine Verschiebung von Batterieelementen 1 schräg zur Reihe jeweils benachbarte Batterieelemente 1 ebenso verschoben werden und somit auch weitere umgebende Deformationselemente 2 einer Deformation unterzogen werden.

Die wirkende Kraft teilt sich so innerhalb der Schicht des Batteriepacks in mehrere Richtungen auf, so dass in dieser Vielzahl der Richtungen der Kraftbetrag reduziert wird und ein geringerer Grad der Zerstörung des Batteriepacks resultiert. An einer Vielzahl von Stellen, an denen Deformationselemente 2 innerhalb der Schicht angeordnet sind, kann die Kraft bzw. Energie eines Unfalls absorbiert werden. Im Idealfall werden lediglich Deformationselemente 2 deformiert, ohne dass Batterieelemente 1 in Mitleidenschaft gezogen werden, so dass der Austritt gefährlicher Substanzen verhindert ist.

Die Figur 2 zeigt hier weiterhin, dass ein Batterieelement 1 aus einer Vielzahl einzelner Batteriezellen 1 b aufgebaut ist, wobei in diesem Beispiel die einzelnen Batteriezellen 1 b zylinderförmig ausgebildet sind und in zueinander versetzten Reihen angeordnet sind, um ein Batterieelement 1 insgesamt auszubilden.

Der Verbund der einzelnen Batteriezellen 1 b kann durch eine äußere Umhüllung eines Batterieelementes gesichert sein. Diese äußere Umhüllung kann durch ein starres oder auch ein flexibles Gehäuse ausgebildet sein. Es ergibt sich hier im Wesentlichen eine Trapezform der Batterieelemente 1 mit zwei schräg zueinander zulaufenden Flächenbereichen 1 a, die maßgeblich bewirken, dass in Kraftrichtung hintereinander liegende Batterieelemente 1 durch Kontaktierung der in benachbarten Reihen liegenden Batterieelemente und durch das aufeinander Abgleiten der Flächenbereiche 1 a in benachbarten Reihen angeordneter Batterieelemente 1 die Kraft auf Nachbarreihen weiterleitet wird.

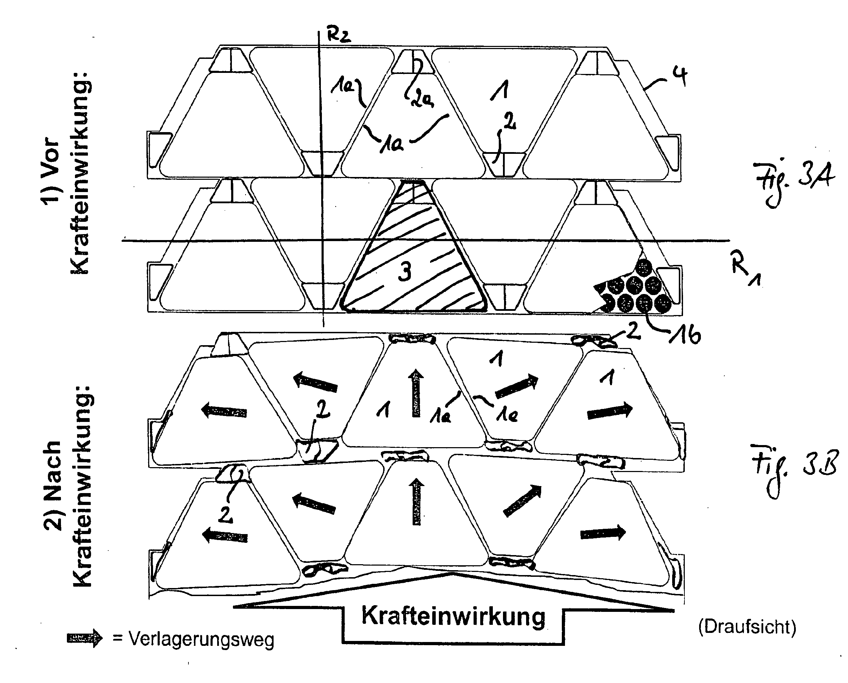

Die Figur 3 zeigt wiederum oben in der Figur 3A für den ungestörten Fall und unten in der Figur 3B für die Situation eines Unfalls eine erfindungsgemäße Anordnung aus Batterieelementen 1 und Deformationselementen 2.

Hier ist die erfindungsgemäße Ausgestaltung so, dass in einer hier betrachteten Reihe R1 mehrere Packungseinheiten 3 im Wechsel um 180 Grad gedreht angeordnet sind. Jede Packungseinheit 3, von der hier eine schraffiert dargestellt ist, umfasst hier ein Batterieelement 1 und ein Deformationselement 2, die sich durch das insbesondere formschlüssige Aneinanderanliegen zu einer gemeinsamen Querschnittsform ergänzen, die hier im Wesentlichen dreieckig ist unter Vernachlässigung der nicht mathematisch exakt ausgebildeten Dreiecks-Ecken bzw. gegebenenfalls noch als trapezförmig bezeichnet werden kann mit einer sehr kurzen äußeren Trapezseite am Deformationselement..

Die Packungseinheiten 3 sind hier lediglich dadurch gebildet, dass jeweils ein Batterieelement 1 und ein Deformationselement 2 formschlüssig lose aneinander liegen. Sie können gegebenenfalls auch aneinander befestigt sein.

Auch hier ist es wieder so wie in der Figur 2 beschrieben, dass ein Batterieelement 1 durch eine Vielzahl einzelner Batteriezellen 1b ausgebildet sein kann. In bekannter Weise sind hier die einzelnen Batteriezellen untereinander kontaktiert, um ein Batterieelement 1 gewünschter Spannung bzw. Kapazität bereitzustellen.

Bezogen auf die Richtung der Reihe R2 sind Packungseinheiten 3 in jeweils gleicher Anordnung hintereinander angeordnet, wobei bei dieser Betrachtung benachbarte Reihen R2 insgesamt um 180 Grad in der Orientierung der darin liegenden Packungseinheiten 3 gedreht sind, so dass sich ein insgesamt formschlüssiger Verbund aller Packungseinheiten 3 untereinander in einer Packungsschicht ergibt.

Die Figur 3A zeigt hierbei, dass ein Deformationselement 2 einen inneren versteifenden Steg 2a aufweisen kann. Dieser erstreckt sich bei der hier gezeigten Ausführungsform zwischen den beiden parallelen Trapezseiten des trapezförmigen Deformationselementes 2, welches aufgrund der Kürze einer dieser parallelen Trapezseiten bereits schon als beinahe dreieckig bezeichnet werden kann.

Die Figur 3B zeigt auch hier in ähnlicher Weise wie bei der Figur 2B, dass durch eine Krafteinwirkung nicht nur die in Kraftrichtung hintereinander in einer Reihe liegenden Deformationselemente 2 einer Deformation unterzogen werden, sondern dass dadurch, dass wiederum zur Reihenrichtung schräg angeordnete Flächenbereiche 1a benachbarter Batterieelemente 1 bei einer Bewegung der Batterieelemente aneinander abgleiten und durch die Schräganordnung die Kraft aus der ursprünglichen Richtung auch schräg bzw. zur Seite hin auf benachbarte Batterieelemente 1 und Deformationselemente 2 verteilt wird, eine Deformation bei einer Vielzahl von Deformationselementen 2 auftritt.

Insbesondere die Figur 3A zeigt hierbei auch weiterhin, dass die Gesamtanordnung eines erfindungsgemäßen Batteriepacks unabhängig von der hier konkret dargestellten Formgestaltung der einzelnen Elemente durch ein Gehäuse 4 eingehäust sein kann, dessen äußere Wandbereiche im Wesentlichen an die äußere Kontur der in der Packungsschicht angeordneten einzelnen Batterie- und Deformationselemente angepasst ist.

Die Einhäusung kann hierbei insbesondere so ausgeführt sein, dass die Packung aus Batterieelementen 1 und Deformationselementen 2 innerhalb der Packungsschicht lagestabil ist. Der wesentliche Vorteil ist gegenüber den bislang im bekannten Stand der Technik vorgesehenen Batteriepacks, dass hier das äußere Gehäuse 4 keine besonderen Anforderungen hat hinsichtlich der Deformationsfestigkeit der Gehäusewände. Es ist gerade erfindungsgemäß vorgesehen, dass die bei einem Unfall auftretenden Kräfte durch die Wandung eines Gehäuses 4 auf die in dem Gehäuse 4 verschieblich angeordneten Batterieelemente 1 und Deformationselemente 2 einwirken kann, um so eine Absorption der Kraft innerhalb des Batteriepacks zu ermöglichen.

Die Anordnung der Figuren 3 kann auch verstanden werden als eine maximale dichte Packung von im Querschnitt (parallel zur Schichtebene) trapezförmigen Batterieelementen 1, bei der sich zwischen Batterieelementen 1 in dieser maximal dichten Packung Freiräume ergeben, die durch Deformationselemente 2 gefüllt sind.

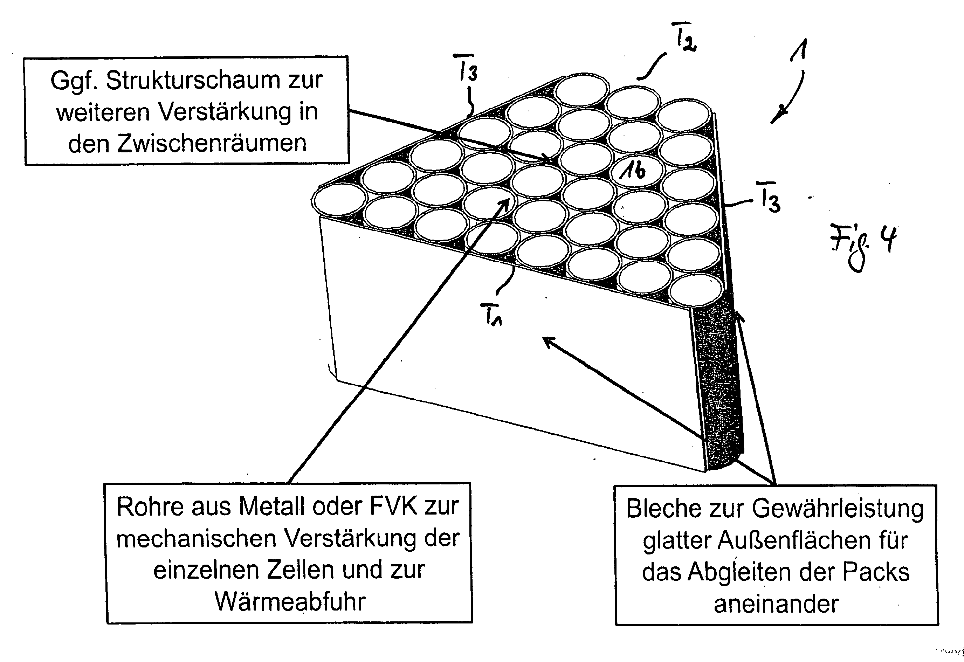

Die Figur 4 zeigt in einer detaillierteren Darstellung ein erfindungsgemäßes Batterieelement 1, welches aus einer Vielzahl einzelner Batteriezellen 1 b besteht, die zylinderförmig ausgeführt sind und in versetzten Reihen gepackt sind. Es ergibt sich hier in einer Ebene in oder parallel zur Packungsschicht des gesamten erfindungsgemäßen Batteriepacks eine Querschnittsform, die im Wesentlichen einem Trapez entspricht mit einer langen Trapezseite T1, einer kurzen Trapezseite T2, an welcher ein Deformationselement 2 mit seiner langen Trapezseite anschließt und zwei nicht parallelen Trapezseiten T3, die schräg zur Senkrechten auf der lange Trapezseite T1 und somit auch schräg zu einer Reihenrichtung, wie beispielsweise der Reihe R2 der Figur 3 angeordnet sind. Schräg bedeutet hierbei in einem Winkel ungleich 0 oder 90 Grad.

Das Batterieelement 1 kann vollständig eingehäust sein oder nur an den hier beschriebenen Trapezseiten T1, T2 und T3 bzw. zumindest an einigen dieser Seiten Bleche aufweisen, um die durch die einzelnen Batteriezellen 1 b wellenartig gestalteten Seitenflächen mit einer planen Überdeckung zu versehen, so dass die hierdurch ausgebildeten planen Flächenbereiche, die an die nicht parallelen Trapezseiten T3 anschließen, bei benachbarten Batterieelementen aneinander entlanggleiten können und Kräfte umlenken, sofern es zu einer Krafteinwirkung kommt, die die Batterieelemente relativ zueinander verschiebt.

Es kann nicht nur mit Bezug auf die konkrete Formgestaltung der Figur 4, sondern mit allgemeiner Gültigkeit für alle möglichen Batterieelemente 1 vorgesehen sein, dass die einzelnen Batteriezellen 1 b zum Zweck einer mechanischen Verstärkung oder auch zur Verbesserung einer Wärmeabfuhr mit Rohren, z.B. aus einem Metall oder einem Verbundwerkstoff umgeben sind.

Weiterhin kann mit gleicher allgemeiner Gültigkeit ein Zwischenraum sowohl zwischen den einzelnen Batteriezellen 1 b eines Batterieelementes 1 als auch in einem erfindungsgemäßen Batteriepack zwischen einzelnen Batterieelementen 1 und/oder Deformationselementen 2 mit einem Hilfsmaterial gefüllt sein, z.B. zur Verstärkung des gesamten inneren Verbundes der Gesamtanordnung. Ein solches Hilfsmaterial kann beispielsweise durch einen Strukturschaum oder eine elastische Vergussmasse ausgebildet sein.

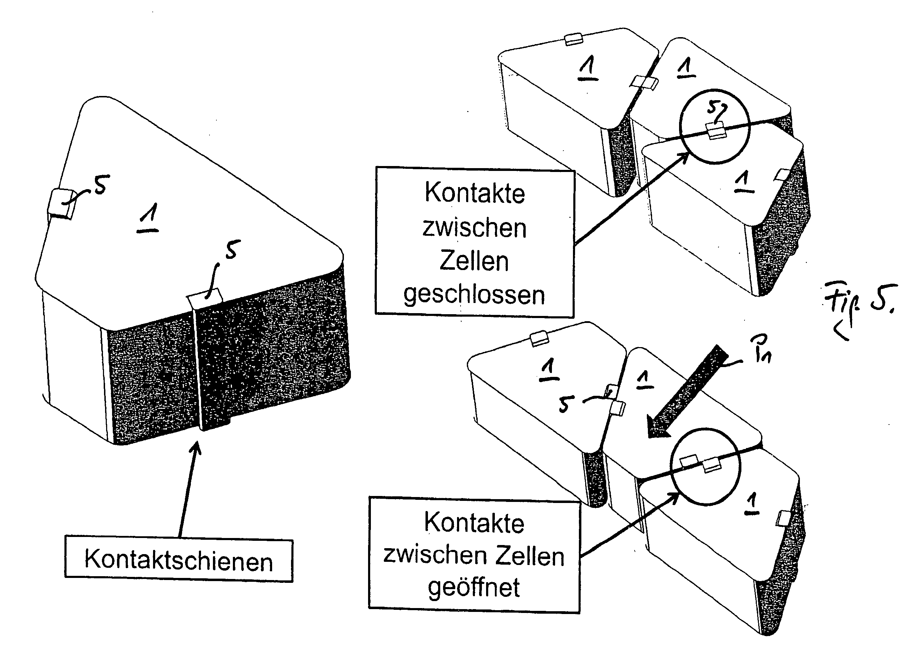

Die Figur 5 zeigt mit Bezug auf die konkreten Batterieelemente 1 der Figuren 3 und 4 jedoch auch mit allgemeiner Gültigkeit für andere, hier nicht gezeigte Querschnittsformen bzw. äußere Formgestaltungen der Batterieelemente 1, dass an den äußeren Wandbereichen (senkrecht zur Packungsschicht / -ebene) und/oder an äußeren Kanten eines solchen Batterieelementes 1 ein jeweiliges Batterieelement 1 elektrische Kontakte 5 aufweisen kann. Ein jeweiliger Kontakt 5 kann dabei als eine Kontaktschiene ausgebildet sein, die eine seitliche Fläche, insbesondere jeweils eine der nicht parallel verlaufenden Flächen eines Batterieelementes 1 über die gesamte Höhe überdeckt.

Innerhalb einer Packungsschicht des erfindungsgemäßen Batteriepacks können demnach die Batterieelemente 1 im unverschobenen Zustand so angeordnet sein, dass die Kontaktelemente 5 von benachbart zueinander liegenden Batterieelementen 1 einander berühren und so einen elektrischen Kontakt zwischen den benachbarten Batterieelementen 1 herstellen.

Kommt es nun zu einer äußeren Krafteinwirkung, wie durch den Pfeil P1 dargestellt, so resultiert hieraus, wie es zuvor beschrieben wurde, eine relative Verschiebung der einzelnen Batterieelemente 1 zueinander, so dass sich die einzelnen Kontaktelemente 5 der benachbarten Batterieelemente 1 hierbei ebenfalls verschieben und mit den benachbarten Kontaktelementen außer Kontakt geraten. Die elektrische Verbindung zwischen benachbarten Batterieelementen wird so bei einer äußeren Krafteinwirkung aufgehoben, so dass ein weiteres Gefährdungspotential bei einem Unfall minimiert ist.

## Patentansprüche

1. Batteriepack umfassend eine Vielzahl von Batterieelementen (1), die in wenigstens einer Packungsschicht nebeneinander gepackt sind und zumindest bereichsweise innerhalb einer Packungsschicht zwischen wenigstens zwei benachbarten Batterieelementen (1) wenigstens ein Deformationselement (2) angeordnet ist, wobei unter einer äußeren Krafteinwirkung die Batterieelemente (1) unter Deformation von Deformationselementen (2) verschieblich sind, **dadurch gekennzeichnet, dass** die Batterieelemente (1) aus einer Vielzahl von Batteriezellen (1 b) ausgebildet sind und das wenigstens eine Deformationselement (2) entweder als ein Hohlprofil ausgebildet ist, dessen inneres Volumen bei einer Deformation kollabierbar ist oder als geschäumter Körper ausgebildet ist, der in seinem gesamten Volumen eine Vielzahl von Hohlräumen ausbildet, die bei einer Krafteinwirkung kollabierbar sind, wobei Batterieelemente (1) und Deformationselemente (2) aufeinander folgend in Reihen (R1, R2) angeordnet sind, die parallel zueinander und versetzt sind und ein Batterieelement (1) einer Reihe (R1, R2) zum Teil in einen Abstandbereich zwischen zwei Batterieelementen (1) einer benachbarten Reihe (R1, R2) hineinragt und in dem Abstandsbereich ein Deformationselement (2) angeordnet ist.

2. Batteriepack nach Anspruch 1, **dadurch gekennzeichnet, dass** das Hohlprofil in der Packungsschicht geschlossen und senkrecht zur Ebene offen ist.

3. Batteriepack nach Anspruch 2, **dadurch gekennzeichnet, dass** ein Deformationselement (2) im Inneren des Hohlprofils durch wenigstens eine Querverstrebung (2a) verstärkt ist.

4. Batteriepack nach einem der vorherigen Ansprüche 2 oder 3, **dadurch gekennzeichnet, dass** ein Deformationselement (2) als ein fluiddurchströmter Kühlkanal ausbildet ist.

5. Batteriepack nach einem der vorherigen Ansprüche, **dadurch gekennzeichnet, dass** die Deformationselemente (2) in der Packungsschicht in wenigstens einer ersten Richtung (R1) eine erste Periodizität und in wenigstens einer zweiten Richtung (R2) eine zweite Periodizität aufweisen.

6. Batteriepack nach einem der vorherigen Ansprüche, **dadurch gekennzeichnet, dass** die Deformationselemente (2) parallel zur Packungsschicht dieselbe Querschnittsform und/oder dieselbe Querschnittsflächengröße aufweisen wie Batterieelemente (1).

7. Batteriepack nach einem der vorherigen Ansprüche, **dadurch gekennzeichnet, dass** je ein Batterieelement (1) und je ein Deformationselement (2) durch formschlüssiges Aneinanderliegen eine Packungseinheit (3) ausbilden, wobei mehrere Packungseinheiten (3) in der Packungsschicht formschlüssig aneinander liegen, insbesondere wobei in einer geraden Reihe (R1) angeordnete Packungseinheiten (3) um 180 Grad verdreht aufeinander folgen.

8. Batteriepack nach einem der vorherigen Ansprüche 6 oder 7, **dadurch gekennzeichnet, dass** ein Batterieelement (1) und/oder ein Deformationselement (2) und/oder eine Packungseinheit (3) wenigstens einen, bevorzugt wenigstens zwei äußere, insbesondere senkrecht zur Packungsschicht angeordnete Flächenbereiche (1a) aufweist, die schräg zur Längserstreckung einer Reihe (R1, R2) angeordnet sind.

9. Batteriepack nach einem der vorherigen Ansprüche, **dadurch gekennzeichnet, dass** ein Batterieelement (1) und/oder ein Deformationselement (2) und/oder eine Packungseinheit (3) parallel zur Packungsschicht einen im Wesentlichen trapezförmigen oder dreieckigen Querschnitt aufweist.

10. Batteriepack nach einem der vorherigen Ansprüche, **dadurch gekennzeichnet, dass** die Batteriezellen (1 b) zylinderförmig sind und die Zylinderachsen der Vielzahl von Batteriezellen (1 b) eines Batterieelements (1) senkrecht zur Packungsschicht angeordnet sind.

11. Batteriepack nach einem der vorherigen Ansprüche, **dadurch gekennzeichnet, dass** ein Batterieelement (1) und/oder eine Packungseinheit (3) Kontaktelemente (5) aufweist, wobei Kontaktelemente (5) benachbarter, insbesondere in einer Reihe (R1, R2) benachbarter Batterieelemente (1) und/oder Packungseinheiten (3) einander kontaktieren, insbesondere deren Kontaktierung durch Verschiebung der Batterieelemente (1) und/oder Packungseinheiten (3) lösbar ist.

12. Batteriepack nach einem der vorherigen Ansprüche, **dadurch gekennzeichnet, dass** ein Zwischenraum zwischen einzelnen Batteriezellen (1 b) eines Batterieelementes (1) mit einem Hilfsmaterial gefüllt ist, insbesondere mit einem Strukturschaum oder einer elastischen Vergußmasse.

## Claims

1. Battery pack comprising a large number of battery elements (1) which are packed next to one another in at least one packing layer and at least one deformation element (2) is arranged between at least two adjacent battery elements (1) at least in regions within a packing layer, wherein, under an external action of force, the battery elements (1) can be displaced with deformation of deformation elements (2), **characterized in that** the battery elements (1) are formed from a large number of battery cells (1b), and the at least one deformation element (2) is designed either as a hollow profile, of which the inner volume can collapse in the event of deformation, or is designed as a foamed body which forms a large number of hollow spaces in its entire volume, it being possible for said hollow spaces to collapse in the event of an action of force, wherein battery elements (1) and deformation elements (2) are arranged such that they follow one another in rows (R1, R2) which are parallel to one another and offset, and a battery element (1) of one row (R1, R2) projects partly into a spacing region between two battery elements (1) of an adjacent row (R1, R2), and a deformation element (2) is arranged in the spacing region.

2. Battery pack according to Claim 1, **characterized in that** the hollow profile is closed in the packing layer and open perpendicular to the plane.

3. Battery pack according to Claim 2, **characterized in that** a deformation element (2) is reinforced by at least one transverse strut arrangement (2a) in the interior of the hollow profile.

4. Battery pack according to either of the preceding Claims 2 and 3, **characterized in that** a deformation element (2) is designed as a cooling channel through which fluid flows.

5. Battery pack according to one of the preceding claims, **characterized in that** the deformation elements (2) in the packing layer have a first periodicity in at least one first direction (R1) and have a second periodicity in at least one second direction (R2).

6. Battery pack according to one of the preceding claims, **characterized in that** the deformation elements (2) have the same cross-sectional shape and/or the same cross-sectional area as battery elements (1) parallel to the packing layer.

7. Battery pack according to one of the preceding claims, **characterized in that** in each case one battery element (1) and in each case one deformation element (2) form a packing unit (3) by resting one against the other in an interlocking manner, wherein a plurality of packing units (3) rest one against the other in an interlocking manner in the packing layer, in particular wherein packing units (3) which are arranged in a straight row (R1) follow one another in a manner rotated through 180°.

8. Battery pack according to either of the preceding Claims 6 and 7, **characterized in that** a battery element (1) and/or a deformation element (2) and/or a packing unit (3) have/has at least one, preferably at least two, outer surface regions (1a), in particular which are arranged perpendicular to the packing layer, and which are arranged obliquely in relation to the longitudinal extent of a row (R1, R2).

9. Battery pack according to one of the preceding claims, **characterized in that** a battery element (1) and/or a deformation element (2) and/or a packing unit (3) have/has a substantially trapezoidal or triangular cross section parallel to the packing layer.

10. Battery pack according to one of the preceding claims, **characterized in that** the battery cells (1b) are cylindrical, and the cylinder axes of the large number of battery cells (1b) of a battery element (1) are arranged perpendicular to the packing layer.

11. Battery pack according to one of the preceding claims, **characterized in that** a battery element (1) and/or a packing unit (3) have/has contact elements (5), wherein contact elements (5) of adjacent battery elements (1), in particular battery elements (1) which are adjacent in a row (R1, R2), and/or packing units (3) make contact with one another, it being possible in particular for contact between them to be broken by displacing the battery elements (1) and/or packing units (3).

12. Battery pack according to one of the preceding claims, **characterized in that** an intermediate space between individual battery cells (1b) of a battery element (1) is filled with an auxiliary material, in particular with a structural foam or an elastic encapsulation compound.

## Revendications

1. Bloc-batterie comprenant une pluralité d'éléments de batterie (1) qui sont emballés les uns à côté des autres dans au moins une couche d'emballage et au moins un élément de déformation (2) étant disposé au moins en partie à l'intérieur d'une couche d'emballage entre au moins deux éléments de batterie adjacents (1), les éléments de batterie (1), sous l'effet de l'action d'une force extérieure, pouvant être déplacés par déformation d'éléments de déformation (2), **caractérisé en ce que** les éléments de batterie (1) sont réalisés à partir d'une pluralité de cellules de batterie (1b) et l'au moins un élément de déformation (2) est réalisé soit sous forme de profilé creux dont le volume intérieur peut être affaissé lors d'une déformation soit sous forme de corps moussé, qui, dans son volume total, constitue une pluralité de cavités qui peuvent être affaissées sous l'effet de l'action d'une force, des éléments de batterie (1) et des éléments de déformation (2) étant disposés successivement en rangées (R1, R2) qui sont parallèles les unes aux autres et décalées et un élément de batterie (1) d'une rangée (R1, R2) pénétrant en partie dans une région d'espacement entre deux éléments de batterie (1) d'une rangée adjacente (R1, R2) et un élément de déformation (2) étant disposé dans la région d'espacement.

2. Bloc-batterie selon la revendication 1, **caractérisé en ce que** le profilé creux dans la couche d'emballage est fermé et est ouvert perpendiculairement au plan.

3. Bloc-batterie selon la revendication 2, **caractérisé en ce qu'**un élément de déformation (2) à l'intérieur du profilé creux est renforcé par au moins un renfort transversal (2a).

4. Bloc-batterie selon l'une quelconque des revendications précédentes 2 ou 3, **caractérisé en ce qu'**un élément de déformation (2) est réalisé sous forme de canal de refroidissement parcouru par un fluide.

5. Bloc-batterie selon l'une quelconque des revendications précédentes, **caractérisé en ce que** les éléments de déformation (2) dans la couche d'emballage présentent dans au moins une première direction (R1) une première périodicité et dans au moins une deuxième direction (R2) une deuxième périodicité.

6. Bloc-batterie selon l'une quelconque des revendications précédentes, **caractérisé en ce que** les éléments de déformation (2) parallèlement à la couche d'emballage présentent la même forme en section transversale et/ou la même dimension de surface en section transversale que les éléments de batterie (1).

7. Bloc-batterie selon l'une quelconque des revendications précédentes, **caractérisé en ce qu'**un élément de batterie respectif (1) et un élément de déformation respectif (2) constituent une unité d'emballage (3) par juxtaposition par engagement positif, plusieurs unités d'emballage (3) étant disposées par engagement positif les unes contre les autres dans la couche d'emballage, et notamment des unités d'emballage (3) disposées dans une rangée droite (R1) se suivant les unes les autres de manière tournée de 180°.

8. Bloc-batterie selon l'une quelconque des revendications précédentes 6 ou 7, **caractérisé en ce qu'**un élément de batterie (1) et/ou un élément de déformation (2) et/ou une unité d'emballage (3) présentent au moins un, de préférence au moins deux, régions de surface extérieures (1a), notamment disposées perpendiculairement à la couche d'emballage, lesquelles sont disposées obliquement par rapport à l'étendue longitudinale d'une rangée (R1, R2).

9. Bloc-batterie selon l'une quelconque des revendications précédentes, **caractérisé en ce qu'**un élément de batterie (1) et/ou un élément de déformation (2) et/ou une unité d'emballage (3) présentent, parallèlement à la couche d'emballage, une section transversale essentiellement trapézoïdale ou triangulaire.

10. Bloc-batterie selon l'une quelconque des revendications précédentes, **caractérisé en ce que** les cellules de batterie (1b) sont cylindriques et les axes des cylindres de la pluralité de cellules de batterie (1b) d'un élément de batterie (1) sont disposés perpendiculairement à la couche d'emballage.

11. Bloc-batterie selon l'une quelconque des revendications précédentes, **caractérisé en ce qu'**un élément de batterie (1) et/ou une unité d'emballage (3) présentent des éléments de contact (5), des éléments de contact (5) d'éléments de batterie (1) et/ou d'unités d'emballage (3) adjacents notamment dans une rangée (R1, R2) étant
en contact mutuel, en particulier leur mise en contact pouvant être supprimée par déplacement des éléments de batterie (1) et/ou des unités d'emballage (3).

12. Bloc-batterie selon l'une quelconque des revendications précédentes, **caractérisé en ce qu'**un espace intermédiaire entre des cellules de batterie individuelles (1b) d'un élément de batterie (1) est rempli d'un matériau auxiliaire, en particulier d'une mousse structurelle ou d'une masse de scellement élastique.
